# EUROPEAN PATENT SPECIFICATION

(11) **EP 1 617 627 B1**
(45) Date of publication and mention of the grant of the patent: **13.12.2017**
(21) Application number: 04450146.8
(22) Date of filing: 16.07.2004
(51) Int. Cl.: H04L 29/12

(54) **A METHOD FOR ADDRESS ALLOCATION**
VERFAHREN ZUR ADRESSZUWEISUNG
MÉTHODE D'ATTRIBUTION D'ADRESSES

(43) Date of publication of application: 18.01.2006
(73) Proprietor: SAGEMCOM DOCUMENTS SAS, 92500 Rueil Malmaison (FR)
(72) Inventor: D'Humieres, Francois, 1030 Wien (AT)
(74) Representative: Lavialle, Bruno François Stéphane

(56) References cited:
- WO-A-00/60824
- WO-A-2004/003587
- ZUBAIR ALEXANDER: "Automatic Private IP Addressing" WINDOWS AND NET, 25 October 1999 (1999-10-25), XP002217668

## Description

The invention relates to a method for the address allocation of subaddresses, with each subscriber (1, 2, 2', 2") having in a network an identifier comprising a main address and one of subaddresses, with each subscriber (1, 2, 2', 2") returning a response signal within a predetermined time interval after receipt of a prompting signal containing the identifier.

In known such methods, the entire identifier must be entered in the address allocation for a new subscriber. Two subscribers must not be allocated the same identifier. The disadvantageous aspect is that in connecting a new subscriber it is first necessary to determine the identifiers of the other connected subscribers in order to enable the determination of a free subaddress. This represents a lengthy procedure which is susceptible to error. Document WO 2004/003587 A. discloses a method for the address allocation of subaddresses, with each subscriber having in the network an identifier comprising a main address and one subaddress. Each subscriber returns a response signal within a predetermined time interval after the receipt of a prompting signal containing the identifier. A new subscriber generates an identifier with a subaddress, sends the prompting signal and allocates itself the subaddress, if no prompting signal is detected.

In the article "Automatic Private IP Addressing", Windows and net, 25 October 1999 from Zubair Alexander there is also a method for the address allocation of subaddresses, with each subscriber having in the network an identifier comprising a main address and one subaddress disclosed.

It is the object of the present invention to provide a method of the kind above in which the known disadvantages are avoided and which is easy to perform and shows a low susceptibility for error. It is a further object of the invention to provide a method which can also be performed by end users in a simple, quick and reliable way.

This is achieved in accordance with the invention in such a way that a new subscriber in the network generates at least two identifiers with the main address of the new subscriber and different subaddresses and transmits the prompting signals containing the identifiers in a packet, then detects the response signals allocated to the identifiers within the predeterminable time interval and, when there is none of the response signals, allocates itself the respective identifier.

This leads to the advantage that only the main address needs to be entered for the new subscriber, but not the subaddress. Then the new subscriber automatically seeks a free subaddress on the basis of the method in accordance with the invention and allocates itself this address. In this way it is possible to perform the allocation of the subaddress in a simple, quick and fully automatic manner. With the method in accordance with the invention it is also possible for an end user who does not know the allocation of the subaddresses to the other connected subscribers to install a new subscriber.

Several prompting signals can be sent by the new subscriber in a packet, which thus allows reducing the costs for the method in accordance with the invention and reducing the average time for performing the method.

It may be provided for in a further development of the invention that the new subscriber, on detecting the response signal, generates a second identifier with the main address of the new subscriber and a second subaddress which differs from the first subaddress and sends the prompting signal containing the second identifier, and finally detects the response signal within the predeterminable time interval and, when there is no response signal, allocates itself the second identifier. In this way it is possible to successively process all possible identifiers until a free identifier is detected.

In a further embodiment of the invention it can be provided that the subaddress is chosen from a predeterminable entirety of subaddresses and, after the detecting of the response signal, an error message is generated in connection with each of the subaddresses of the entirety of subaddresses. Based on the error messages it is possible to determine the subaddresses for which a response signal was detected. Error messages can be saved in this connection, especially in a matrix or the like.

According to another embodiment of the invention it can be provided that the new subscriber is provided for the transmission of an SMS, MMS. Such messages are transmitted by means of a protocol. The protocol can be used in a simple way for generating the prompting signal which produces a response signal.

The invention is explained in closer detail by reference to the enclosed drawings showing an embodiment, wherein:
Fig. 1 shows the transmission of prompting signals with identifiers which comprise the main address by a new subscriber;
Fig. 2 shows the receipt of the prompting signal from the subscribers, and
Fig. 3 shows the transmission of a response signal by a subscriber with respective identifier.

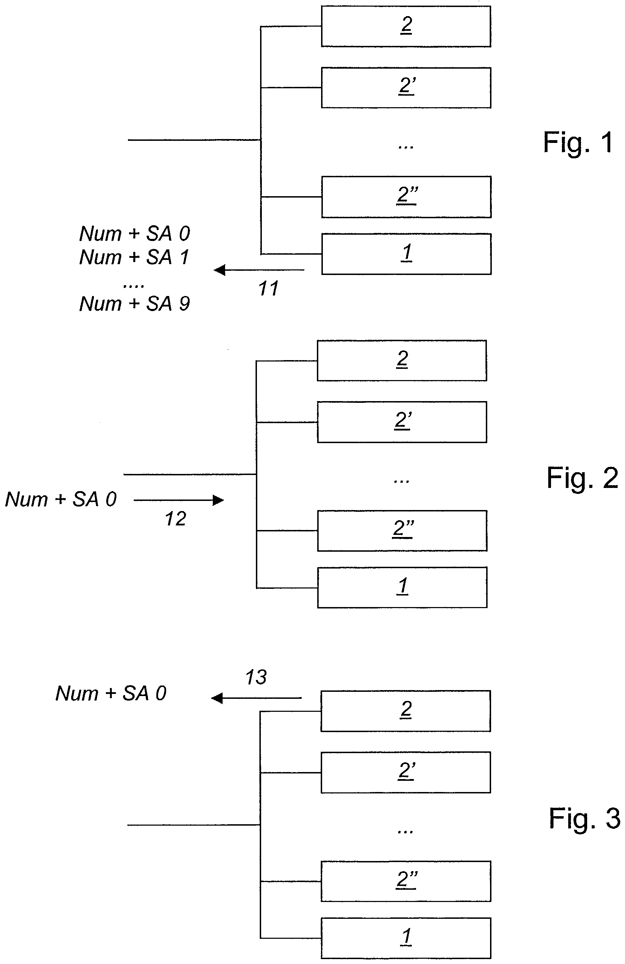

Figs. 1 to 3 show the steps of an embodiment of a method in accordance with the invention for the address allocation of subaddresses, with each subscriber 1, 2, 2', 2" having an identifier in the network, which identifier comprises a main address and one of the subaddresses. Each subscriber 1, 2, 2', 2" returns a response signal within a predetermined time interval after the receipt of a prompting signal containing the identifier. In a preferred embodiment of the invention the identifier is the sum of the main address, which is predetermined, and one of the subaddresses.

A new subscriber 1 generates in the network at least one first identifier with the main address of the new subscriber 1 and a first predeterminable subaddress. Then the new subscriber 1 transmits the prompting signal containing the first identifier. Thereafter the new subscriber 1 detects the response signal in a predeterminable time interval and allocates itself the first identifier if there is no response signal.

This method appears especially suitable for new subscribers 1 which are provided for the transmission of an SMS, MMS or the like. These transmissions are based on a protocol, as a result of which the prompting signal producing the response signal can be generated very easily, whereby conventional protocols can be used. It is advantageous in these protocols that the response signal occurs in a time predetermined by the protocol. This can be taken into account for the predetermination of the time interval in which the response signal is detected. It can also be provided that separate prompting signals are provided that merely produce the response signals. In the case of such prompting signals, a retransmission of an information by the prompting signal and/or the response signal to a user can be suppressed.

During the transmission of an SMS, MMS or the like, a message is sent to a provider or the like and sent by the same to the respective subscriber 1, 2, 2', 2". Figs. 1 to 3 show a new subscriber 1 and further subscribers 2, 2', 2" who all have the same main address. The new subscriber 1 generates several identifiers with the main address of the new subscriber 1 and different subaddresses and the prompting signals contained in connection with these identifiers. The sending of the prompting signals is indicated in fig. 1 by arrow 11, with the identifiers of the prompting signals being symbolized by "Num + SA" and a number for the different subaddresses. Two or more prompting signals can be sent to the provider.

The individual prompting signals are processed successively by the provider or the like. Arrows 12 represents in fig. 2 the receipt of the opening signal which belongs to the identifier symbolized by "Num + SA 0" and which is sent by the provider or the like to subscriber 1, 2, 2', 2".

Insofar as the identifier belonging to the opening signal is allocated to one of the subscribers 2, 2', 2", the same sends a response signal. This is indicated in fig. 3 by the arrow 13. This response signal is detected by the new subscriber 1, as a result of which it is detected that the subaddress belonging to the respective identifier has already been allocated. If there is no response signal, the new subscriber 1 allocates itself the respective subaddress.

In the case of another embodiment of the method in accordance with the invention, it does not occur that several prompting signals are sent by the new subscriber 1. Instead, only the prompting signal belonging to a first identifier which comprises the main address and a first predeterminable subaddress will be generated and sent. Then the response signal will be detected in the predeterminable time interval and, when there is no response signal, the new subscriber 1 will allocate itself the first identifier.

Upon detecting the response signal, the new identifier 1 can then generate a second identifier which comprises the main address and a second subaddress which differs from the first subaddress and send the prompting signal containing the second identifier. Thereafter, the response signal is detected in the predeterminable time interval and, if there is no response signal, the new subscriber 1 will allocate itself the second identifier. If the response signal is detected, the process can be repeated with a new subaddress until no response signal is detected. It is ensured with this procedure that the response signal can be allocated specifically to the pertinent prompting signal. In a method in which several prompting signals are sent in a packet this might not be the case when the time interval for sending the response signal is larger than the interval between the opening signals.

In other embodiments of the method in accordance with the invention it can also be provided that the prompting signal is sent directly to the further subscribers 2, 2', 2" and not via a provider or the like.

It can further be provided that the subaddress is chosen from a predeterminable entirety of subaddresses and after the detection of the response signal an error message is generated in connection with each of the subaddresses of the entirety. Based on these error messages it is possible to determine the identifiers in connection with which a response signal was detected. The error messages can be saved to a matrix or the like, thus enabling a simple allocation to the pertinent subaddresses. Especially in cases where the prompting signals were sent in a packet, a prompting signal can be sent again in connection with the free subaddresses after detection of the response signal relating to the subaddresses of the entirety of subaddresses in order to substantially exclude transmission errors or the like which may lead to an omission of the response signal although the identifier has been allocated.

## Claims

1. A method for an address allocation of subaddresses, with each subscriber (1, 2, 2', 2") having in a network an identifier comprising a main address and a subaddress with a subscriber (1, 2, 2', 2") returning a response signal, insofar as an identifier in a prompting signal is allocated to the subscriber, within a predetermined time interval after receipt of a prompting signal containing the allocated identifier, **characterized in that** a new subscriber (1) in the network generates at least two identifiers, each identifier comprising a main address of the new subscriber (1) and different subaddresses, transmits prompting signals containing the generated identifiers in a packet, then detects response signals from the subscribers having allocated one of the at least two generated identifiers within the predetermined time interval and, when there is no response signal for any of the generated identifiers, it allocates itself the respective identifier.

2. A method as claimed in claim 1, **characterized in that** the new subscriber (1), on detecting a response signal, generates a second identifier with the main address of the new subscriber (1) and a second subaddress which differs from the first subaddress and sends the prompting signal containing the second identifier, and subsequently detects the response signal within the predeterminable time interval and, when there is no response signal, allocates itself the second identifier.

3. A method as claimed in claim 1 or 2, **characterized in that** the subaddress is chosen from a predeterminable entirety of subaddresses and, after the detection of the response signal, an error message is produced in connection with each of the subaddresses of the entirety.

4. A method as claimed in claim 1, 2 or 3, **characterized in that** the new subscriber (1) is provided for the transmission of an SMS or MMS.

## Patentansprüche

1. Verfahren zur Adresszuweisung von Subadressen, wobei jeder Teilnehmer (1, 2, 2', 2") in einem Netzwerk einen Identifizierer hat, der eine Hauptadresse und eine Subadresse umfasst, wobei ein Teilnehmer (1, 2, 2', 2"), insofern als ein Identifizierer in einem Anforderungssignal dem Teilnehmer zugewiesen ist, ein Antwortsignal innerhalb eines vorgegebenen Zeitintervalls nach Empfang eines Anforderungssignals, das den zugewiesenen Identifizierer enthält, zurücksendet, **dadurch gekennzeichnet, dass** ein neuer Teilnehmer (1) in dem Netzwerk mindestens zwei Identifizierer erzeugt, wobei jeder Identifizierer eine Hauptadresse des neuen Teilnehmers (1) und verschiedene Subadressen umfasst, Anforderungssignale, die die erzeugten Identifizierer in einem Paket enthalten, überträgt, dann Antwortsignale von den Teilnehmern, denen einer der mindestens zwei erzeugten Identifizierer zugewiesen ist, innerhalb des vorgegebenen Zeitintervalls erfasst und, wenn kein Antwortsignal für irgendeinen der erzeugten Identifizierer vorhanden ist, er sich selbst den entsprechenden Identifizierer zuweist.

2. Verfahren nach Anspruch 1, **dadurch gekennzeichnet, dass** der neue Teilnehmer (1) bei Erfassen eines Antwortsignals einen zweiten Identifizierer mit der Hauptadresse des neuen Teilnehmers (1) und einer zweiten Subadresse erzeugt, die sich von der ersten Subadresse unterscheidet, und das Anforderungssignal, das den zweiten Identifizierer enthält, sendet und anschließend das Antwortsignal innerhalb des vorgebbaren Zeitintervalls erfasst und, wenn kein Antwortsignal vorhanden ist, er sich selbst den zweiten Identifizierer zuweist.

3. Verfahren nach Anspruch 1 oder 2, **dadurch gekennzeichnet, dass** die Subadresse aus einer vorgebbaren Gesamtheit von Subadressen ausgewählt wird und nach dem Erfassen des Antwortsignals eine Fehlermeldung in Verbindung mit jeder der Subadressen der Gesamtheit erzeugt wird.

4. Verfahren nach Anspruch 1, 2 oder 3, **dadurch gekennzeichnet, dass** der neue Teilnehmer (1) für die Übertragung einer SMS oder MMS vorgesehen ist.

## Revendications

1. Procédé d'attribution d'adresse pour des sous-adresses, chaque abonné (1, 2, 2', 2") ayant, dans un réseau, un identifiant comprenant une adresse principale et une sous-adresse, un abonné (1, 2, 2', 2") renvoyant un signal de réponse, dans la mesure où un identifiant dans un signal d'invite est attribué à l'abonné, pendant un intervalle de temps prédéterminé après la réception d'un signal d'invite contenant l'identifiant attribué, **caractérisé en ce qu'**un nouvel abonné (1) dans le réseau génère au moins deux identifiants, chaque identifiant comprenant une adresse principale du nouvel abonné (1) et différentes sous-adresses, transmet des signaux d'invite contenant les identifiants générés dans un paquet, puis détecte des signaux de réponse provenant des abonnés auxquels a été attribué l'un des au moins deux identifiants générés pendant l'intervalle de temps prédéterminé et, lorsqu'il n'y a pas de signal de réponse, pour l'un quelconque des identifiants générés, s'attribue à lui-même l'identifiant respectif.

2. Procédé selon la revendication 1, **caractérisé en ce que** le nouvel abonné (1), au moment de la détection d'un signal de réponse, génère un second identifiant avec l'adresse principale du nouvel abonné (1), et une seconde sous-adresse qui est différente de la première sous-adresse et envoie le message d'invite contenant le second identifiant, et ensuite détecte le signal de réponse pendant l'intervalle de temps pouvant être prédéterminé, et, lorsqu'il n'y a pas de signal de réponse, s'attribue à lui-même le second identifiant.

3. Procédé selon la revendication 1 ou 2, **caractérisé en ce que** la sous-adresse est choisie dans un ensemble pouvant être prédéterminé de sous-adresses et, après la détection du signal de réponse, un message d'erreur est produit en relation avec chacune des sous-adresses dudit ensemble.

4. Procédé selon la revendication 1, 2 ou 3, **caractérisé en ce que** le nouvel abonné (1) est équipé pour la transmission d'un SMS ou d'un MMS.
